# EUROPEAN PATENT APPLICATION

(11) **EP 3 203 216 A1**
(43) Date of publication of application: **09.08.2017**
(21) Application number: 15847476.7
(22) Date of filing: 01.10.2015
(51) Int. Cl.: G01N 21/76, G01N 35/02, G01N 35/04

(54) **LUMINESCENCE MEASURING DEVICE AND AUTOMATIC ANALYSIS DEVICE**

(30) Priority: 02.10.2014 JP 2014203656
(71) Applicant: Jeol Ltd., Akishima-shi Tokyo 196-8558 (JP)
(72) Inventor: Nakamura Mizuki, Akishima-shi Tokyo 196-8558 (JP); Takasu Shinichi, Akishima-shi Tokyo 196-8558 (JP)
(74) Representative: Boult Wade Tennant
(86) International application number: PCT/JP2015/077964
(87) International publication number: WO 2016/052704

(57) **Abstract**

The present invention is a luminescence measuring device that is provided with: a black box-like housing having a vessel accommodating portion for accommodating a reaction vessel, a reaction vessel insertion/withdrawal opening for inserting and withdrawing the reaction vessel into and from the vessel accommodating portion, and a penetrating light path that connects the vessel accommodating portion to the outside; a light detector having a light receiving surface, which faces the vessel accommodating portion with the penetrating light path interposed therebetween, and being attached to the housing; a light shielding member having an insertion/withdrawal opening shutter portion, which freely opens and closes the reaction vessel insertion/withdrawal opening, and a detection shutter portion, which freely opens and closes the penetrating light path; and a drive mechanism that synchronizes and drives the insertion/withdrawal opening shutter portion and the detection shutter portion. With the penetrating light path shielded by the detection shutter portion, the reaction vessel insertion/withdrawal opening is configured by the insertion/withdrawal opening shutter portion to be in an open state.

## Description

### Technical Field

The present invention relates to a luminescence measuring device and an automatic analysis device including the luminescence measuring device.

### Background Art

Examples of a method for quantitatively detecting an intended substance such as an antigen or an antibody contained in a sample, such as a blood serum or a blood plasma taken from a living body, for use as a test sample include a method for measuring an intensity of light emission resulting from an occurrence of a chemiluminescence phenomenon. A luminescence measuring device used for such a measurement is required to highly reliably detect even an extremely small amount of light with high sensitivity. To meet this requirement, a sample vessel and a photodetector are housed in a housing shielded against light during a light-emission measurement, as exemplified below.

A device disclosed in PTL 1, for example, includes a first light-shielding box that houses a sample vessel and a photodetector and that includes an open-close door, which is opened and closed to place the sample vessel in the first light-shielding box. The device also includes a second light-shielding box that is disposed inside the first light-shielding box and in which a photodetector is housed. The second light-shielding box includes a through hole that is openable and closeable by a movement of a plate member. When a holder of the sample vessel is disposed in the through hole and the through hole is kept open, the bottom of the sample vessel is positioned so as to face the photoelectric surface of the photodetector. When, on the other hand, the through hole is closed by the plate member, stray light to the photodetector is interrupted (see PTL 1 with regard to the above description).

A device disclosed in PTL 2 includes an open-close stage and a light-shielding box, which is disposed inside the device and houses a photodetector. A top board on a top board of the light-shielding box has a through hole in which a measurement vessel holder is installed. A plate-shaped optical-filter installation holder is inserted into the top board. As a result of sliding the plate-shaped optical-filter installation holder, an optical filter is interposed between the sample vessel and the photodetector or the plate-shaped optical-filter installation holder is used as a shutter of a photodetector (see PTL 2 with regard to the above description).

### Citation List

### Patent Literature

PTL 1: Japanese Unexamined Patent Application Publication No. 2008-268019
PTL 2: Japanese Unexamined Patent Application Publication No. 2012-211785

### Summary of Invention

### Technical Problem

A luminescence measuring device having the above-described configuration includes a highly sensitive photodetector, such as a photomultiplier, so as to be capable of detecting a small amount of the sample. Such a highly sensitive photodetector may be broken upon receipt of high-intensity light such as outdoor light. It is thus important to protect the photodetector from outdoor light by keeping the light-shielding box, in which the photodetector light-shielded is housed, shielded from light when the sample vessel is taken in and out of the device.

In the luminescence measuring device having the above-described configuration, however, opening or closing of the open-close door or the open-close stage, which is opened or closed for taking the sample vessel in or out, is not linked with opening or closing of a mechanism for moving a plate member or an optical-filter installation holder, which is used as a shutter of the photodetector.

The use of the luminescence measuring device thus involves the following procedure: a light-shielding box in which the photodetector is housed is firstly brought into a light-shielded state; and then the open-close door or the open-close stage is opened to take the sample vessel in or out from the device. This procedure renders the operation procedure complicated and requires a complex control.

The present invention thus aims to provide a luminescence measuring device capable of reliably preventing a photodetector from being broken by an intrusion of outdoor light while the operation procedure is simplified, and an automatic analysis device including the luminescence measuring device.

### Solution to Problem

In order to achieve the above-described object, a luminescence measuring device according to the present invention includes a housing, a photodetector, a light-shielding member, and a driving mechanism. The housing has a black box form and includes a vessel housing portion that houses a reaction vessel, a reaction-vessel port through which the reaction vessel is taken in and out of the vessel housing portion, and an optical through path that connects the vessel housing portion to an outside. The photodetector is attached to the housing and has a light receiving surface facing the vessel housing portion across the optical through path. The light-shielding member includes an entrance shutter portion and a detection shutter portion. The entrance shutter portion renders the reaction-vessel port open or closed. The detection shutter portion renders the optical through path open or closed. The driving mechanism drives the entrance shutter portion and the detection shutter portion in synchronization with each other. In the device, the entrance shutter portion renders the reaction-vessel port open in a state where the detection shutter portion is covering the optical through path.

In addition, an automatic analysis device according to the present invention includes a luminescence measuring device, a vessel transport arm, and an input-output processing portion. The vessel transport arm takes a reaction vessel into or out of the luminescence measuring device. The input-output processing portion controls photodetection performed by the luminescence measuring device and taking in or out of the reaction vessel performed by the vessel transport arm. In the device, the input-output processing portion causes the photodetector to start a measurement in synchronization with the driving mechanism starting driving the entrance shutter portion and the detection shutter portion after the vessel transport arm takes the reaction vessel into the vessel housing portion in a state where the entrance shutter portion renders the reaction-vessel port open.

### Advantageous Effects of Invention

The present invention having the above-described configuration can provide a luminescence measuring device capable of reliably preventing a photodetector from being broken by an intrusion of outdoor light while the operation procedure is simplified, and an automatic analysis device including the luminescence measuring device.

### Brief Description of Drawings

[Fig. 1] Fig. 1 is a perspective view of a luminescence measuring device according to an embodiment.
[Fig. 2] Fig. 2 is an exploded perspective view of a main portion of the luminescence measuring device according to an embodiment.
[Fig. 3] Fig. 3 is a sectional view of the main portion of the luminescence measuring device illustrated in Fig. 1.
[Fig. 4] Fig. 4 is a sectional view of the main portion of the luminescence measuring device illustrated in Fig. 1.
[Fig. 5] Fig. 5 is an enlarged view of portion C in Fig. 3.
[Fig. 6] Fig. 6 is a top view of the luminescence measuring device illustrated in Fig. 1.
[Fig. 7] Fig. 7 is a perspective view of a modification example of the luminescence measuring device according to an embodiment.
[Fig. 8] Fig. 8 is a flowchart of a measurement procedure according to an embodiment.
[Fig. 9] Fig. 9 illustrates a process (first step) of the luminescence measuring device viewed from the top for illustrating the measurement procedure according to an embodiment.
[Fig. 10] Fig. 10 illustrates a process (second step) of the luminescence measuring device viewed from the top for illustrating the measurement procedure according to an embodiment.
[Fig. 11] Fig. 11 illustrates a process (third step) of the luminescence measuring device viewed from the top for illustrating the measurement procedure according to an embodiment.
[Fig. 12] Fig. 12 illustrates a process (fourth step) of the luminescence measuring device viewed from the top for illustrating the measurement procedure according to an embodiment.
[Fig. 13] Fig. 13 is a graph showing measurement results obtained through the use of a measurement procedure according to an embodiment.
[Fig. 14] Fig. 14 is a flowchart for illustrating a modification example of a measurement procedure according to an embodiment.
[Fig. 15] Fig. 15 illustrates a schematic configuration of an automatic analysis device including a luminescence measuring device according to an embodiment.

### Description of Embodiments

Hereinbelow, a luminescence measuring device, a light-emission measurement method, and an automatic analysis device according to embodiments of the present invention are described in detail with reference to the drawings.

### <<Luminescence Measuring Device>>

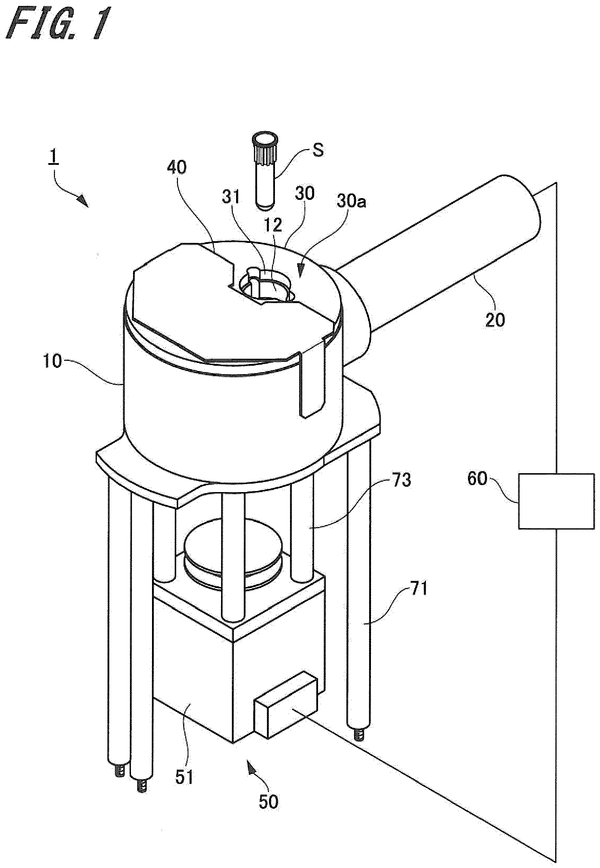

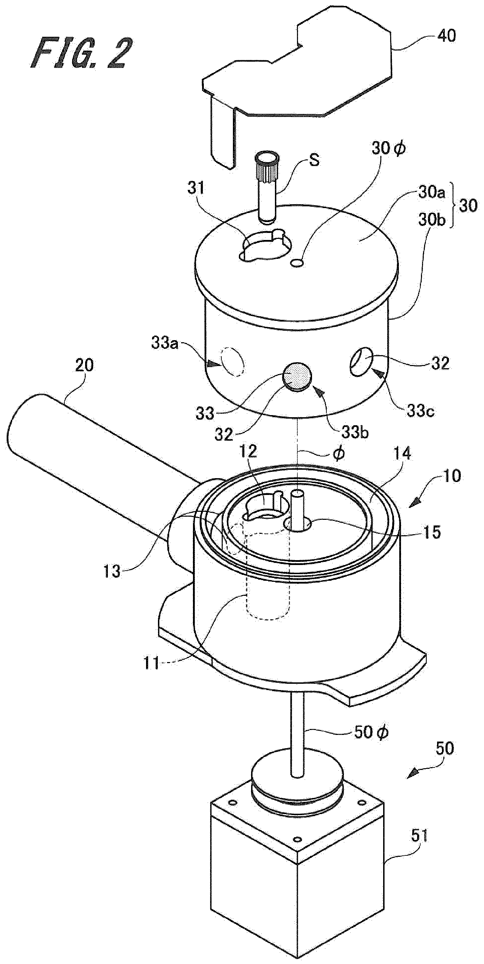

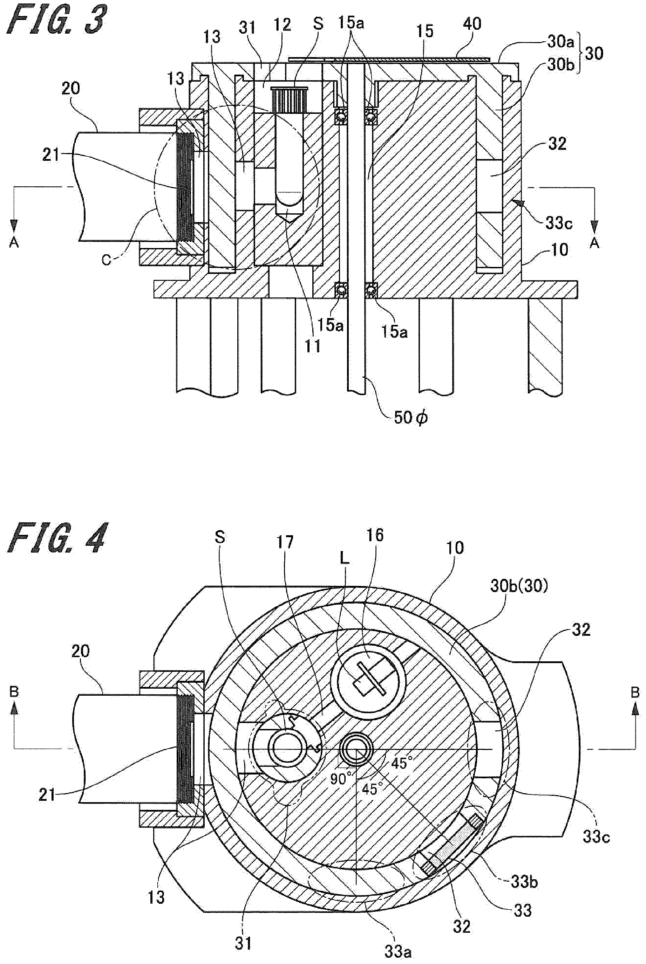

Fig. 1 is a perspective view of a luminescence measuring device 1 according to an embodiment of the present invention. Fig. 2 is an exploded perspective view of the luminescence measuring device 1 according to one embodiment. Fig. 3 and Fig. 4 are sectional views of a main portion of the luminescence measuring device 1 according to one embodiment, where Fig. 3 corresponds to a section taken along line B-B in Fig. 4 and Fig. 4 corresponds to a section taken along line A-A in Fig. 3.

The luminescence measuring device 1 illustrated in these drawings is a device used for quantifying the sample (antigen or antibody) by, for example, chemiluminescent enzyme immunoassay (CLEIA). The luminescence measuring device 1 includes a housing 10, which houses a reaction vessel S, a photodetector 20, a light-shielding member 30, which includes an entrance shutter portion 30a and a detection shutter portion 30b, a guard member 40, a driving mechanism 50, which drives the light-shielding member 30, and an input-output processing portion 60. Characteristically, the entrance shutter portion 30a and the detection shutter portion 30b are driven in synchronization with each other. Hereinbelow, these components are described in detail.

### <Housing 10>

The housing 10 is formed as a black box that houses a reaction vessel S. This housing 10 includes a vessel housing portion 11, a reaction-vessel port 12, an optical through path 13, a grooved portion 14, and a driving shaft hole 15, which are formed by, for example, boring holes in a cylinder and respectively have the following configurations.

### [Vessel Housing Portion 11]

The vessel housing portion 11 is a space for housing the reaction vessel S holding a sample. The vessel housing portion 11 is positioned a predetermined distance away from the central axis φ of the cylinder constituting the housing 10. The vessel housing portion 11 is bored from one base surface (upper base surface) of the cylinder so as to be parallel to the central axis φ. The reaction vessel S is a transparent vessel shaped like a cuvette. Thus, the reaction vessel S is housed in the vessel housing portion 11 so as to be parallel to the central axis φ of the cylinder.

### [Reaction-Vessel Port 12]

The reaction-vessel port 12 is an opening of the vessel housing portion 11 of the housing 10 formed in the upper base surface of the cylinder. The reaction vessel S is taken out of and into the vessel housing portion 11 through the reaction-vessel port 12.

### [Optical Through Path 13]

The optical through path 13 is a portion connecting the vessel housing portion 11 and the outside of the housing 10 to each other. The optical through path 13 is bored between the vessel housing portion 11 and the side circumferential surface of the cylinder constituting the housing 10. The optical through path 13 having this configuration is positioned at such a level as to face an area of the reaction vessel S extending from the bottom portion to the side surface in the state where the reaction vessel S is housed in the vessel housing portion 11. The opening of the optical through path 13 facing the vessel housing portion 11 has such a shape as to cover a storage portion of a sample T in the reaction vessel S housed in the vessel housing portion 11. The optical through path 13 has a shape that does not bend from the side circumferential surface of the housing 10 to the vessel housing portion 11. The opening width of the optical through path 13 coaxially increases from the vessel housing portion 11 toward a light receiving surface 21 of the photodetector 20, described below. The shape of the optical through path 13 is further described in detail in the subsequent description of the configuration of the detection shutter portion 30b.

### [Grooved Portion 14]

The grooved portion 14 is formed over the entire circumference of the side circumferential wall of the housing 10. The grooved portion 14 has such a shape as to have an annularly continuous cross section when taken parallel to the upper base surface of the cylinder constituting the housing 10. The grooved portion 14 is formed so as to divide the optical through path 13. The grooved portion 14 having such a configuration is formed concentrically with the cylinder constituting the housing 10. The detection shutter portion 30b, described below, is inserted into the grooved portion 14. The grooved portion 14 has a depth that is larger than or equal to the height of the detection shutter portion 30b.

### [Driving Shaft Hole 15]

The driving shaft hole 15 is a through hole formed along the central axis φ of the cylinder constituting the housing 10. A driving shaft 50φ, which drives the light-shielding member 30 and is described below, is inserted into the driving shaft hole 15. The driving shaft hole 15 is fully independent from the vessel housing portion 11 and the optical through path 13.

As illustrated in Fig. 4, besides these components, the housing 10 may include a light-source holding portion 16, which houses a light source L, and an optical path 17, which is formed at a portion between the light-source holding portion 16 and the vessel housing portion 11. The light-source holding portion 16 and the optical path 17 are disposed fully independent from the optical through path 13, the grooved portion 14, and the driving shaft hole 15. An example of the light source L housed in the light-source holding portion 16 is a light emitting diode (LED) used for detecting the photodetector 20.

### <Photodetector 20>

The photodetector 20 is attached to the side circumferential wall of the housing 10 so as to correspond to the position at which the optical through path 13 is formed. The photodetector 20 includes a light receiving surface 21. The photodetector 20 is attached to the side circumferential wall of the housing 10 such that the light receiving surface 21 faces the vessel housing portion 11 across the optical through path 13. In the state where the photodetector 20 is attached to the side circumferential wall, the central axis of the optical through path 13 passing through the center in the opening width direction is aligned with the central axis of the photodetector 20 passing through the center of the light receiving surface 21. In addition, the photodetector 20 is kept shielded from light from the outside.

A device capable of detecting feeble light such as a photomultiplier is preferably usable as the photodetector 20. Examples of the photodetector 20, however, are not limited to these and may include a photodiode.

The photodetector 20 is connected to the input-output processing portion 60. The input-output processing portion 60 causes the photodetector 20 to start and finish photodetection measurement. A signal detected by the photodetector 20 is digitized by an analog-to-digital converter, not illustrated, and the digitized signal is input to the input-output processing portion 60 as measurement data.

### <Light-Shielding Member 30>

The light-shielding member 30 has a shape of a cylindrical tube having a closed bottom. The bottom is used as the entrance shutter portion 30a and the side circumferential wall is used as the detection shutter portion 30b and the entrance shutter portion 30a and the detection shutter portion 30b are integrally formed. The entrance shutter portion 30a has an entrance opening 31, described below. The detection shutter portion 30b has a detection opening 32, described below. When the light-shielding member 30 from which the entrance shutter portion 30a and the detection shutter portion 30b are integrally formed is moved, the entrance shutter portion 30a and the detection shutter portion 30b are driven in synchronization with each other. Here, integrally forming the entrance shutter portion 30a and the detection shutter portion 30b is not limited to forming the entrance shutter portion 30a and the detection shutter portion 30b into a single member and includes the state where the entrance shutter portion 30a and the detection shutter portion 30b are integrally formed with another member interposed therebetween.

The light-shielding member 30 is disposed such that the detection shutter portion 30b formed from the side circumferential wall is fitted into the grooved portion 14 of the housing 10. In this state, the bottom portion of the cylindrical tube forming the light-shielding member 30 is superposed on the bottom of the housing 10 and the center 30φ of the light-shielding member 30 is aligned with the central axis φ of the housing 10. The light-shielding member 30 and the housing 10 are fitted to each other with a gap of a certain degree left therebetween while a light intrusion is prevented using a labyrinth structure. Thus, the light-shielding member 30 is rotated relative to the housing 10 while outdoor light is prevented from leaking into the vessel housing portion 11 and the optical through path 13. The closed bottom of the cylindrical tube forming the light-shielding member 30 is used as the entrance shutter portion 30a. The side circumferential wall of the cylindrical tube is used as the detection shutter portion 30b.

The entrance shutter portion 30a and the detection shutter portion 30b of the light-shielding member 30 thus described have the following configurations.

### [Entrance Shutter Portion 30a]

The entrance shutter portion 30a has an entrance opening 31 that renders the reaction-vessel port 12 open. The entrance shutter portion 30a is used to open or close the reaction-vessel port 12 of the housing 10. The entrance shutter portion 30a is formed of the bottom portion of the cylindrical tube forming the light-shielding member 30. When rotated, the light-shielding member 30 is caused to slide over the bottom of the housing 10.

When the light-shielding member 30 is rotated to a predetermined position, the entrance opening 31 formed in the entrance shutter portion 30a is aligned with the reaction-vessel port 12 of the housing 10 to render the reaction-vessel port 12 open. The entrance opening 31 is positioned a predetermined distance away from the center 30φ of the light-shielding member 30. Preferably, the entrance opening 31 has a shape as minimum as possible within a range that does not prevent the reaction vessel S from being taken in or out of the reaction-vessel port 12. It suffices, however, that the entrance opening 31 has a shape that facilitates taking the reaction vessel S in or out.

### [Detection Shutter Portion 30b]

The detection shutter portion 30b has detection openings 32 that allow the optical through path 13 of the housing 10 to connect thereto. The detection shutter portion 30b is used to open or close the optical through path 13 of the housing 10. The detection shutter portion 30b is formed from the side circumferential wall of the cylindrical tube forming the light-shielding member 30. When rotated, the light-shielding member 30 is caused to slide over both side walls of the grooved portion 14 of the housing 10.

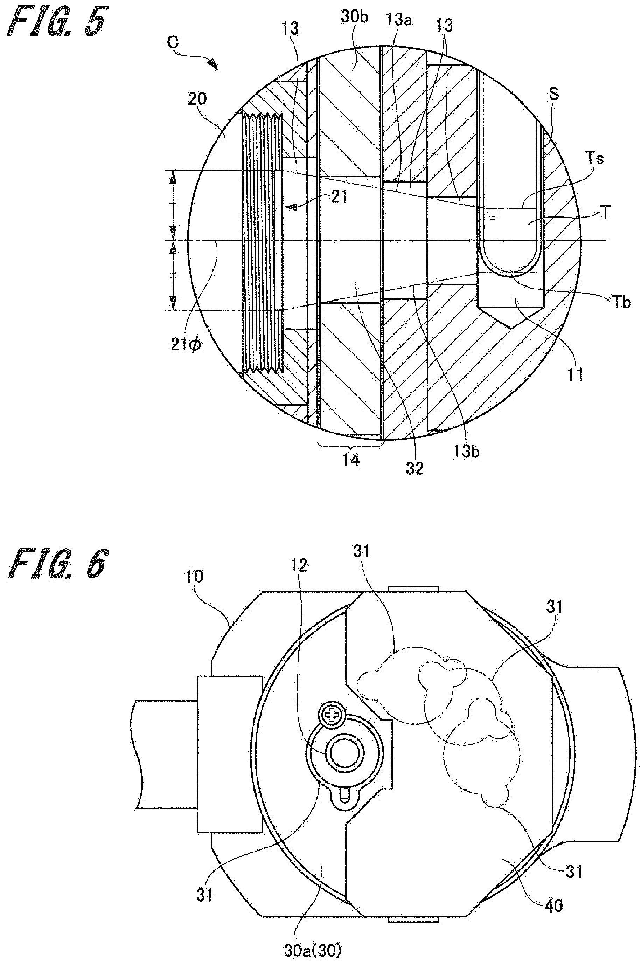

Each detection opening 32 of the detection shutter portion 30b is aligned with the optical through path 13 of the housing 10 when the light-shielding member 30 is rotated to a predetermined position. As illustrated in the enlarged section of Fig. 5 (corresponding to portion C in Fig. 3), the detection opening 32 constitutes part of the optical through path 13, so that the optical through path 13 connects the light receiving surface 21 of the photodetector 20 and the vessel housing portion 11 to each other. As illustrated in Fig. 3 and Fig. 4, however, the detection openings 32 are formed at positions that are not aligned with the optical through path 13 and the detection shutter portion 30b divides and covers the optical through path 13 in the state where the entrance opening 31 of the entrance shutter portion 30a is aligned with the reaction-vessel port 12 of the housing 10. Specifically, the entrance opening 31 of the entrance shutter portion 30a renders the reaction-vessel port 12 of the housing 10 open only in the state where the detection shutter portion 30b covers the optical through path 13.

As illustrated in Fig. 5, here, the detection opening 32 constitutes part of the optical through path 13 in the state where the detection opening 32 allows the optical through path 13 to connect the light receiving surface 21 of the photodetector 20 and the vessel housing portion 11 to each other. Also in this state, the central axis of the optical through path 13 passing through the center in the opening width direction is aligned with the central axis 21φ of the photodetector 20 passing through the center of the light receiving surface 21, as described above. The opening shape of each point of the optical through path 13 is determined such that a straight line 13a, connecting a liquid surface Ts of the sample T to the highest portion of the light receiving surface 21, is symmetric about the central axis 21φ with a straight line 13b, connecting a bottom surface Tb of the sample T to the lowest portion of the light receiving surface 21.

In the state where a predetermined amount of the sample T is hold in the reaction vessel S and the reaction vessel S is housed in the vessel housing portion 11, a line segment connecting any point of the sample T within the range of the liquid surface Ts to the bottom surface Tb to any point of the outer periphery of the light receiving surface 21 of the detector 20 falls within the optical through path 13. Thus, light emitted from the entire amount of the sample T held in the reaction vessel S is incident on the light receiving surface 21 without being interrupted.

When the light-shielding member 30 in the above-described state is rotated, the position of the entrance opening 31 is shifted from the position of the reaction-vessel port 12 of the housing 10. In addition, in the state where the optical through path 13 is aligned with the detection opening 32, the entrance shutter portion 30a of the light-shielding member 30 covers the reaction-vessel port 12 of the housing 10.

As illustrated in Fig. 2, the detection shutter portion 30b of the light-shielding member 30 may have multiple detection openings 32 having the above-described configuration. The multiple detection openings 32 are positioned at a predetermined level of the central axis φ and arranged in the direction in which the detection shutter portion 30b is driven (rotation direction) so as to be independent from one another. An optical filter 33 is disposed at at least one of the multiple detection openings 32. Here, the detection shutter portion 30b has, for example, two detection openings 32, and the optical filter 33 is disposed at one of the two detection openings 32.

Here, an example used as the optical filter 33 disposed at the detection opening 32 is a ND filter. Usable examples are filters that equally absorb light of the entire wavelength range and transmit a predetermined proportion (for example, 1%) of the entire amount of light therethrough.

The detection shutter portion 30b may also include a zero-percent optical filter portion 33a for obtaining, for example, a reference value. The zero-percent optical filter portion 33a of the detection shutter portion 30b is formed from the side circumferential wall of the light-shielding member 30. The zero-percent optical filter portion 33a is formed of a portion of the side circumferential wall of the light-shielding member 30 located so as to face the optical through path 13 of the housing in the state where the reaction-vessel port 12 of the housing 10 is covered with the entrance shutter portion 30a. The zero-percent optical filter portion 33a having this configuration is disposed at a position independent from the detection openings 32.

Here, in the state where the portion determined as the zero-percent optical filter portion 33a is aligned with the optical through path 13 of the housing 10, the reaction-vessel port 12 of the housing 10 is covered with the entrance shutter portion 30a of the light-shielding member 30.

In the illustrated example, the zero-percent optical filter portion 33a, the one-percent optical filter portion 33b, at which the optical filter 33 is disposed, and the hundred-percent optical filter portion 33c, which is formed of one detection opening 32, are arranged in this order in the direction in which the detection shutter portion 30b is rotated.

As a further detailed example, the zero-percent optical filter portion 33a is disposed at a portion of the detection shutter portion 30b 90° with respect to the direction toward the position of the entrance opening 31 from the center of the bottom surface of the light-shielding member 30, as illustrated in Fig. 4. The one-percent optical filter portion 33b is disposed at a portion of the detection shutter portion 30b 135° with respect to the direction. The hundred-percent optical filter portion 33c is disposed at a portion of the detection shutter portion 30b 180° with respect to the direction.

The number of the detection openings 32 formed in the detection shutter portion 30b or the form of the optical filters 33 is not limited to those described above. Within the range that satisfies the above-described positional conditions, more detection openings may be formed as needed. Depending on the purpose of use of the luminescence measuring device 1, for example, a band-pass filter may be used as the optical filter 33 instead of a ND filter.

### <Guard Member 40>

As illustrated in the top view of Fig. 6, the guard member 40 is a light-shielding plate superposed on the entrance shutter portion 30a formed of the light-shielding member 30. The guard member 40 has such a shape as to cover a wide range of the entrance shutter portion 30a while leaving the reaction-vessel port 12 of the housing 10 open. The guard member 40 is fixed to the housing 10 without interfering with a rotation of the light-shielding member 30. Thus, in the state where the reaction-vessel port 12 of the housing 10 is covered with the entrance shutter portion 30a, the guard member 40 covers the entrance opening 31 displaced from the reaction-vessel port 12.

### <Driving Mechanism 50>

The driving mechanism 50 rotates the light-shielding member 30 and is thus used to drive the entrance shutter portion 30a and the detection shutter portion 30b in synchronization with each other. The driving mechanism 50 includes a motor 51 and a driving shaft 50φ fixed to the rotary shaft of the motor 51, which have the following configurations.

### [Motor 51]

The motor 51 is, for example, a stepping motor driven by pulses and the rotation speed of the motor 51 is accurately controllable.

### [Driving Shaft 50φ

The driving shaft 50φ is fixed to the rotary shaft of the motor 51 in an erect state and extends through the driving shaft hole 15 of the housing 10. The driving shaft 50φ is rotatable inside the driving shaft hole 15. The end of the driving shaft 50φ opposite to the end at which the motor 51 is disposed is caused to pass through the driving shaft hole 15 and fixed to the center 30φ of the entrance shutter portion 30a of the light-shielding member 30. As illustrated in Fig. 3, the driving shaft 50φ is supported by bearing portions 15a disposed in the driving shaft hole 15. Examples used as the bearing portions 15a are ball bearings. More preferably, shielding ball bearings are used to prevent light from leaking from the bearing portions 15a. Thus, the light-shielding member 30 fixed to the driving shaft 50φ is rotated by being driven by the motor 51 while highly accurately controlling the speed of rotation with respect to the housing 10.

### <Input-Output Processing Portion 60>

The input-output processing portion 60 controls the light-emission measurement performed by the photodetector 20, controls rotations of the light-shielding member 30 performed by the driving mechanism 50, and processes measurement data obtained from the photodetector 20. The controlling on other components and processing on measurement data performed by the input-output processing portion 60 are described in detail in the following light-emission measurement method.

### <Other Components>

As illustrated in Fig. 1, besides the above-described components, the luminescence measuring device 1 includes components as needed, such as leg portions 71, which support the housing 10, and support members 73, which support the driving mechanism 50.

### <Operation of Luminescence Measuring Device>

The luminescence measuring device 1 having the above-described configuration operates in the following manner.

Firstly, the light-shielding member 30 is rotated by being driven by the motor 51 to align the entrance opening 31 of the entrance shutter portion 30a with the reaction-vessel port 12 of the housing 10. In this state, the entrance opening 31 and the reaction-vessel port 12 are exposed through the guard member 40 to render the vessel housing portion 11 open. Thus, the reaction vessel S is allowed to be taken into and out from the vessel housing portion 11 of the housing 10. In this state, the detection shutter portion 30b integrated with the entrance shutter portion 30a divides and covers the optical through path 13.

Subsequently, the light-shielding member 30 is rotated by being driven by the motor 51 to align one detection opening 32 of the detection shutter portion 30b with the optical through path 13 of the housing 10. In this state, the optical through path 13 is rendered open, so that the light receiving surface 21 of the photodetector 20 faces the vessel housing portion 11 across the optical through path 13. Thus, light emitted from the inside of the reaction vessel S housed in the vessel housing portion 11 is rendered detectable by the photodetector 20.

In this state, the entrance shutter portion 30a integrally formed with the detection shutter portion 30b is driven in synchronization with the detection shutter portion 30b and the entrance shutter portion 30a reliably shields the reaction-vessel port 12 of the housing 10. In addition, the entrance opening 31 formed in the entrance shutter portion 30a is covered with the guard member 40, so that outdoor light is reliably prevented from leaking into the housing 10 through the entrance opening 31.

### <Effect of Luminescence Measuring Device 1 according to Embodiment>

In the luminescence measuring device 1 having the above-described configuration, the entrance shutter portion 30a that shields the reaction-vessel port 12 and the detection shutter portion 30b that shields the photodetector 20 from light are integrally formed from the light-shielding member 30 to drive the entrance shutter portion 30a and the detection shutter portion 30b in synchronization with each other. Thus, the reaction vessel S is taken into and out of the housing 10 through a single operation while the photodetector 20 is reliably shielded from light without individually operating these portions. This configuration is thus capable of reliably preventing the photodetector 20 from being broken by an intrusion of outdoor light while simplifying the operation procedure.

### «Modification Example of Luminescence Measuring Device»

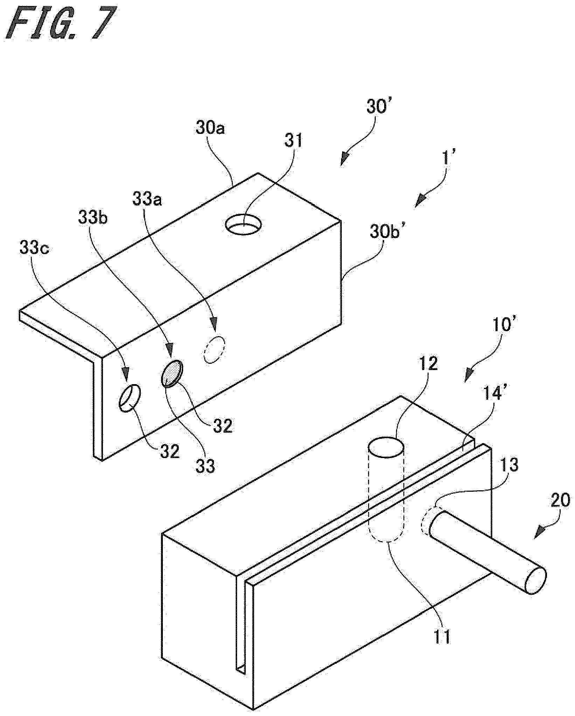

Fig. 7 is a perspective view of a modification example of the luminescence measuring device according to the embodiment of the invention. As illustrated in Fig. 7, a luminescence measuring device 1' has a housing 10', which houses a reaction vessel S and has an angular prism shape.

This housing 10' is formed as a black box and includes a vessel housing portion 11, a reaction-vessel port 12, an optical through path 13, and a grooved portion 14', which are formed by boring holes in the angular prism. These components are the same as those in the luminescence measuring device illustrated in Fig. 1. However, the grooved portion 14' has a flat surface since it is formed along the side circumferential wall of the housing 10' having a prism shape.

The entrance shutter portion 30a and the detection shutter portion 30b' are integrally formed from the light-shielding member 30', so that the entrance shutter portion 30a and the detection shutter portion 30b' are driven in synchronization with each other. These components are the same as those in the luminescence measuring device illustrated in Fig. 1. The entrance shutter portion 30a has an entrance opening 31 and the detection shutter portion 30b' has two detection openings 32, and an optical filter 33 is disposed at one of the two detection openings 32. However, the detection shutter portion 30b' has a flat board shape so as to be slidable while being fitted into the grooved portion 14'.

A driving mechanism that drives the light-shielding member 30' having the above-described configuration causes the light-shielding member 30' to slide along the grooved portion 14' of the housing 10'. Although not illustrated, the luminescence measuring device 1' includes an input-output processing portion, which controls the light-emission measurement performed by the photodetector 20, controls rotations of the light-shielding member 30' performed by the driving mechanism, and processes measurement data obtained by the photodetector 20.

The luminescence measuring device 1' having the above-described configuration is also capable of reliably preventing the photodetector 20 from being broken by an intrusion of outdoor light while the operation procedure is simplified since the entrance shutter portion 30a and the detection shutter portion 30b', which shields the photodetector 20 from light, are integrally formed from the light-shielding member 30' so as to be driven in synchronization with each other.

### «Light-Emission Measurement Method»

Subsequently, as an example of a light-emission measurement method involving the use of the luminescence measuring device according to the invention, a light-emission measurement method involving the use of the luminescence measuring device 1 illustrated in Fig. 1 to Fig. 6 is exemplarily described. In the light-emission measurement method described here, the input-output processing portion 60 of the luminescence measuring device 1 described above drives the photodetector 20 and the driving mechanism 50 and performs data processing of measurement data obtained by the photodetector 20.

### <Procedure of Light-Emission Measurement>

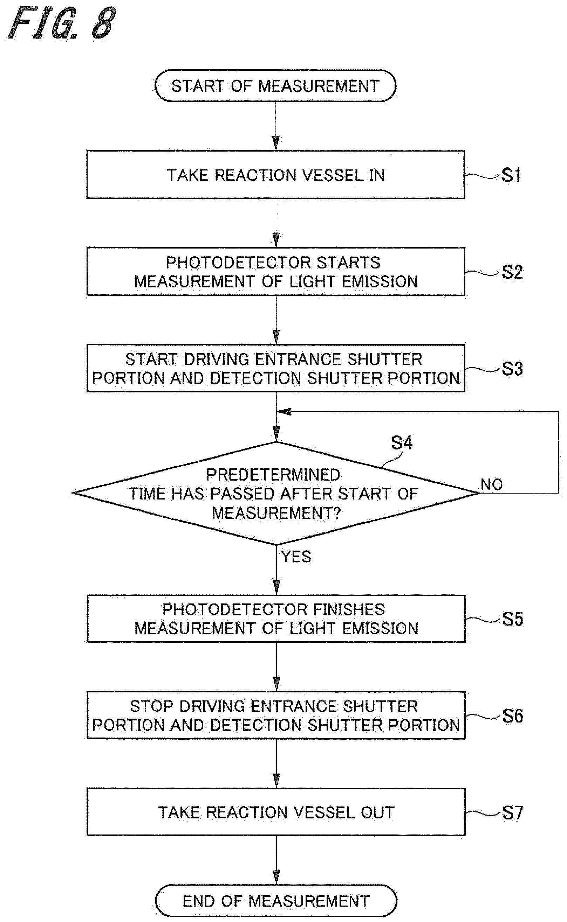

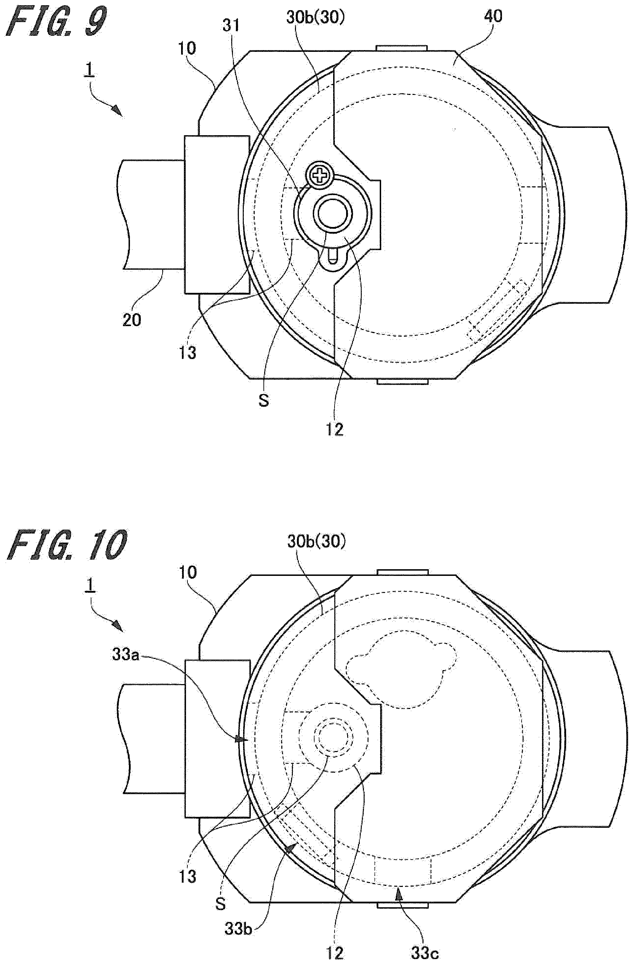

Referring first to the flowchart of Fig. 8 and the processes of the luminescence measuring device 1 viewed from the top illustrated in Fig. 9 to Fig. 12, the procedure of the light-emission measurement performed by the luminescence measuring device 1 is described.

### [Step S1]

Firstly in step S1, immediately after the start of measurement, the reaction vessel S is transported into the vessel housing portion 11. At this time, as illustrated in Fig. 9, the light-shielding member 30 is rotated to align the entrance opening 31 of the entrance shutter portion 30a with the reaction-vessel port 12 of the housing 10. Thus, as also illustrated in Fig. 3 and Fig. 4, the reaction-vessel port 12 is exposed through the guard member 40 and the entrance opening 31 to render the vessel housing portion 11 open while the detection shutter portion 30b is covering the optical through path 13. Then, the reaction vessel S is transported into the vessel housing portion 11 from the reaction-vessel port 12. The reaction vessel S is transported into the vessel housing portion 11 by, for example, a robot arm.

### [Step S2]

Subsequently, in step S2, the photodetector 20 starts a light-emission measurement. The light-emission measurement is continuously performed by the photodetector 20 almost until driving of the entrance shutter portion 30a and the detection shutter portion 30b, described below, is finished regardless of whether the optical through path 13 is covered or uncovered. Here, for example, measurement data is continuously acquired at predetermined intervals (for example, intervals of 0.1 seconds). The predetermined intervals at which measurement data is acquired are determined in accordance with the entire measurement time length and the rotation speed of the detection shutter portion 30b. For example, the predetermined intervals are determined to values at which stable measurement data is acquired predetermined times within a time period, described below, in which the rotation of the light-shielding member 30 is temporarily stopped.

### [Step S3]

In step S3, concurrently with or subsequently to the start of the light-emission measurement performed by the photodetector 20 in step S2, driving of the entrance shutter portion 30a and the detection shutter portion 30b is started. Driving of the entrance shutter portion 30a and the detection shutter portion 30b is started in synchronization with the start of a light-emission measurement performed by the photodetector 20 and in response to one signal for starting the light-emission measurement. Here, step S3 suffices if it is performed in synchronization with step S2 and in response to one signal. Thus, as long as determined in advance, step S3 may be performed before or after the start of the light-emission measurement performed by the photodetector 20 in step S2.

Here, the entrance shutter portion 30a and the detection shutter portion 30b are driven in the state where the photodetector 20 is continuously performing the light-emission measurement started in step S2. Such driving of the entrance shutter portion 30a and the detection shutter portion 30b is performed in the following manner by a rotation of the light-shielding member 30 including an integrated unit of the entrance shutter portion 30a and the detection shutter portion 30b.

### (Driving of Shutter Portion)

Specifically, the light-shielding member 30 including an integrated unit of the entrance shutter portion 30a and the detection shutter portion 30b is driven so that the light-shielding member 30 is rotated in an uniform direction (for example, clockwise) from the state where the entrance opening 31 of the entrance shutter portion 30a is aligned with the reaction-vessel port 12 of the housing 10, as illustrated in Fig. 9. At this time, the rotation speed is controlled to be a predetermined speed.

Then, as illustrated in Fig. 10, the light-shielding member 30 is rotated 90° clockwise and the rotation of the light-shielding member 30 is temporarily stopped for a predetermined time length in the state where the zero-percent optical filter portion 33a disposed in the detection shutter portion 30b is aligned with the optical through path 13 of the housing 10. The time length for which the rotation of the light-shielding member 30 is temporarily stopped is determined to be, for example, a time length that enables acquirement of stable measurement data or a time length that enables acquirement of a sufficiently large quantity of measurement data in total. For example, to acquire measurement data for one second when the photodetector 20 detects light emission from the reaction vessel S through the zero-percent optical filter portion 33a, the rotation of the light-shielding member 30 is temporarily stopped for at least one second or, when needed, for a time length obtained by adding to one second a time length required for stabilizing the measurement data. Thus, for example, 10 points of measurement data acquired at intervals of 0.1 seconds (that is, equivalent to one second) are acquired as the measurement data through the zero-percent optical filter portion 33a.

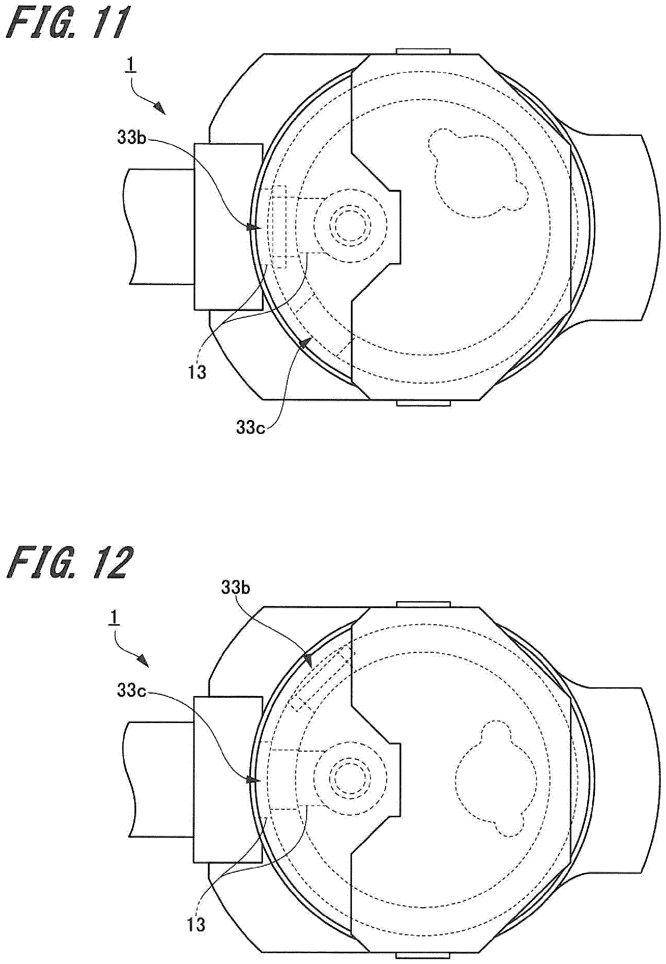

Thereafter, the filters are switched from one to another by rotating again the light-shielding member 30 (for example, clockwise) in the uniform direction at the predetermined speed. Then, as illustrated in Fig. 11, the light-shielding member 30 is rotated clockwise 45° further and the rotation of the light-shielding member 30 is temporarily stopped for a predetermined time period in the state where the one-percent optical filter portion 33b disposed at one detection opening 32 of the detection shutter portion 30b is aligned with the optical through path 13 of the housing 10. The time length for which the rotation of the light-shielding member 30 is temporarily stopped is the same as that in the case where the zero-percent optical filter portion 33a is used.

Then, the filters are switched from one to another by rotating again the light-shielding member 30 (for example, clockwise) in the uniform direction at the predetermined speed. Then, as illustrated in Fig. 12, the light-shielding member 30 is rotated clockwise 45° further and the rotation of the light-shielding member 30 is temporarily stopped for a predetermined time period in the state where the hundred-percent optical filter portion 33c disposed at another detection opening 32 of the detection shutter portion 30b is aligned with the optical through path 13 of the housing 10. The time length for which the rotation of the light-shielding member 30 is temporarily stopped is the same as that in the case where the zero-percent optical filter portion 33a is used.

Thereafter, the light-shielding member 30 is rotated again in the uniform direction (for example, clockwise) so that the entrance opening 31 of the entrance shutter portion 30a is aligned with the reaction-vessel port 12 of the housing 10.

The above-described driving of the light-shielding member 30 is performed while the rotation speed is accurately regulated by a stepping motor. In parallel with the driving of the above-described light-shielding member 30 including an integrated unit of the entrance shutter portion 30a and the detection shutter portion 30b, the light-emission measurement started by the photodetector 20 in step S2 is performed.

### [Step S4]

Subsequently, in step S4, whether a predetermined time length has passed from the start of measurement in step S2 is determined. Here, a time length long enough to finish measurements at all the filter portions, the zero-percent optical filter portion 33a, the one-percent optical filter portion 33b, and the hundred-percent optical filter portion 33c from the start of measurements performed by the photodetector 20 is determined and whether this determined time length has passed is determined.

An example determined as the measurement time length is nine seconds, which is the total of the time length of the measurements at the zero-percent optical filter portion 33a, the one-percent optical filter portion 33b, and the hundred-percent optical filter portion 33c performed while the light-shielding member 30 is being stopped for one second and the time length required before and after switching of the filters from one to another. Whether nine seconds have passed from the start of the measurement in step S2 is determined. Only when it is determined that nine seconds have passed (Yes), the procedure proceeds to the subsequent step of step S5.

### [Step S5]

In step S5, since it is determined that the predetermined time has passed, the light-emission measurement performed by the photodetector 20 is finished.

### [Step S6]

In step S6, when, as illustrated in Fig. 9, the entrance opening 31 of the entrance shutter portion 30a is aligned with the reaction-vessel port 12 of the housing 10 as a result of the above-described rotation of the light-shielding member 30, driving of the entrance shutter portion 30a and the detection shutter portion 30b, integrally formed from the light-shielding member 30, is stopped.

Driving of the entrance shutter portion 30a and the detection shutter portion 30b is stopped in the state where the light-shielding member 30 is rotated 360° on the basis of the driving speed and the stop time of the light-shielding member 30 accurately regulated by the stepping motor. Thus, if determined in advance, step S6 may be performed concurrently with step S5 or may be before or after the completion of the light-emission measurement performed by the photodetector 20 in step S5.

### [Step S7]

Subsequently in step S7, after driving of the entrance shutter portion 30a and the detection shutter portion 30b is stopped in step S6, the reaction vessel S in the vessel housing portion 11 is taken out through the reaction-vessel port 12, which is exposed through the guard member 40 and the entrance opening 31. The reaction vessel S in the vessel housing portion 11 is taken out by, for example, a vessel transport arm.

Thus, the light-emission measurement performed by the luminescence measuring device 1 is finished. Here, all the steps of the light-emission measurement are performed within approximately 15 seconds, including, for example, nine seconds of the above-described measurement time performed by the photodetector and the time required for taking the reaction vessel S into the vessel housing portion 11 in step S1 and for taking the reaction vessel S out of the vessel housing portion 11 in step S7.

### <Data Processing>

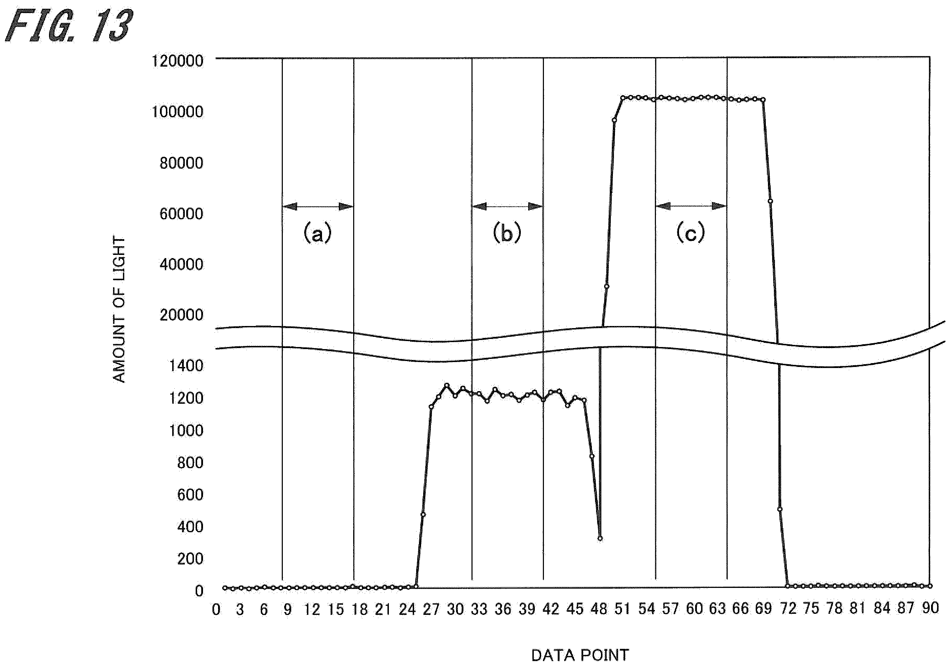

Subsequently, the data processing of the measurement data acquired through the above-described procedure is described. Fig. 13 is a graph of output data, which is an example of the measurement results acquired through the above-described procedure. The measurement data acquired at predetermined intervals is expressed in the amount of light acquired through light emission. This graph chronologically shows 90 points of measurement data No. 1 to No. 90, which are acquired at 0.1-second intervals within nine seconds from the start of the light-emission measurement performed by the photodetector 20 in step S2 up to the completion of the light-emission measurement in step S5.

Specifically, a range (a) of measurement data acquired in the light-emission measurement at the zero-percent optical filter portion 33a, a range (b) of measurement data acquired in the light-emission measurement at the one-percent optical filter portion 33b, and a range (c) of measurement data acquired in the light-emission measurement at the hundred-percent optical filter portion 33c are chronologically shown in order corresponding to the rotation direction of the light-shielding member 30. This graph also shows, between the measurement data range (a), the measurement data range (b), and the measurement data range (c), measurement data acquired while the light-shielding member 30 is being rotated for switching the filters from one to another and measurement data acquired while the rotation of the light-shielding member 30 is stopped for stabilizing measurement values.

Here, in the above-described measurement procedure, driving of the entrance shutter portion 30a and the detection shutter portion 30b is accurately regulated by the stepping motor and the start of the light-emission measurement performed by the photodetector 20 is synchronized with the start of driving of the entrance shutter portion 30a and the detection shutter portion 30b. Thus, the input-output processing portion 60 extracts, as light-emission measurement values, measurement data that falls within the measurement data range (a), the measurement data range (b), and the measurement data range (c) from among the points of measurement data No. 1 to No. 90 in the graph on the basis of the above-described driving of the entrance shutter portion 30a and the detection shutter portion 30b.

Then, the integrals of the extracted measurement data (light-emission measurement values) that falls within the respective ranges are calculated as final data. Thus, the final data obtained by totalizing the measurement data for, for example, 0.1 seconds x 10 times = 1 second is acquired as a measurement value of light emission from the reaction vessel detected by the photodetector 20 through the zero-percent optical filter portion 33a, the one-percent optical filter portion 33b, and the hundred-percent optical filter portion 33c.

### <Effect of Light-Emission Measurement Method of Embodiment>

In the above-described light-emission measurement method, the start of driving of the entrance shutter portion 30a and the detection shutter portion 30b is synchronized with the start of the continuous light-emission measurement performed by the photodetector 20. Thus, the measurement data ranges (a) to (c), acquired while the zero-percent optical filter portion 33a, the one-percent optical filter portion 33b, and the hundred-percent optical filter portion 33c are each aligned with the optical through path 13, are accurately extracted by, for example, a time control from among the measurement data acquired as continuous data. Thus, the measurement data acquired using multiple filter portions are capable of being acquired through one continuous light-emission measurement.

Such an effect of the light-emission measurement method is also an effect of the luminescence measuring device 1 including the input-output processing portion 60 that controls an operation of the above-described light-emission measurement method.

### «Modification Example of Light-Emission Measurement Method»

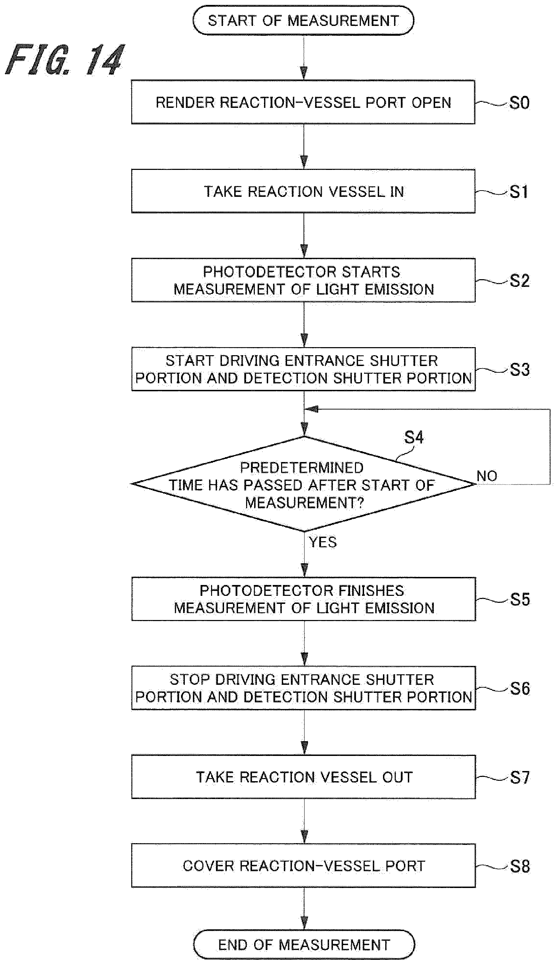

Referring now to the flowchart in Fig. 14, a modification example of the measurement procedure is described as a modification example of a light-emission measurement method involving the use of the luminescence measuring device 1 having the above-described configuration.

The measurement procedure in the flowchart of Fig. 14 differs from the measurement procedure described above with reference to Fig. 8 in that it additionally includes step S0 immediately after the start of a measurement and step S8 immediately before the completion of the measurement. The additionally included steps S0 and S8 are performed in the following manner.

### [Step S0]

Firstly, in step S0 added immediately after the start of a measurement, the reaction-vessel port 12 of the housing 10 is rendered open. Step S0 is prepared for the case where the reaction-vessel port 12 of the housing 10 is closed with the entrance shutter portion 30a before a measurement is started. Thus, in this step, the light-shielding member 30 is rotated immediately after the start of the measurement to align the entrance opening 31 of the entrance shutter portion 30a with the reaction-vessel port 12 of the housing 10, as illustrated in Fig. 9.

### [Step S8]

In step S8 added immediately before the completion of the measurement, the reaction-vessel port 12 of the housing 10 is covered with the entrance shutter portion 30a. Here, the light-shielding member 30 is rotated after step S7 in which the reaction vessel S is taken out of the vessel housing portion 11 while the entrance opening 31 of the entrance shutter portion 30a is aligned with the reaction-vessel port 12 of the housing 10, as illustrated in Fig. 9. Thus, the measurement is finished in the state where the reaction-vessel port 12 of the housing 10 is covered with the entrance shutter portion 30a.

### <Effect of Modification Example>

The above-described procedure of the modification example is capable of preventing contamination of the inside of the vessel housing portion 11 by covering the reaction-vessel port 12 while the light-emission measurement is not performed.

The luminescence measuring device 1' having the configuration described with reference to Fig. 7 including the modification example also performs the light-emission measurement method described above in the same manner and is capable of acquiring the same effects.

### «Automatic Analysis Device»

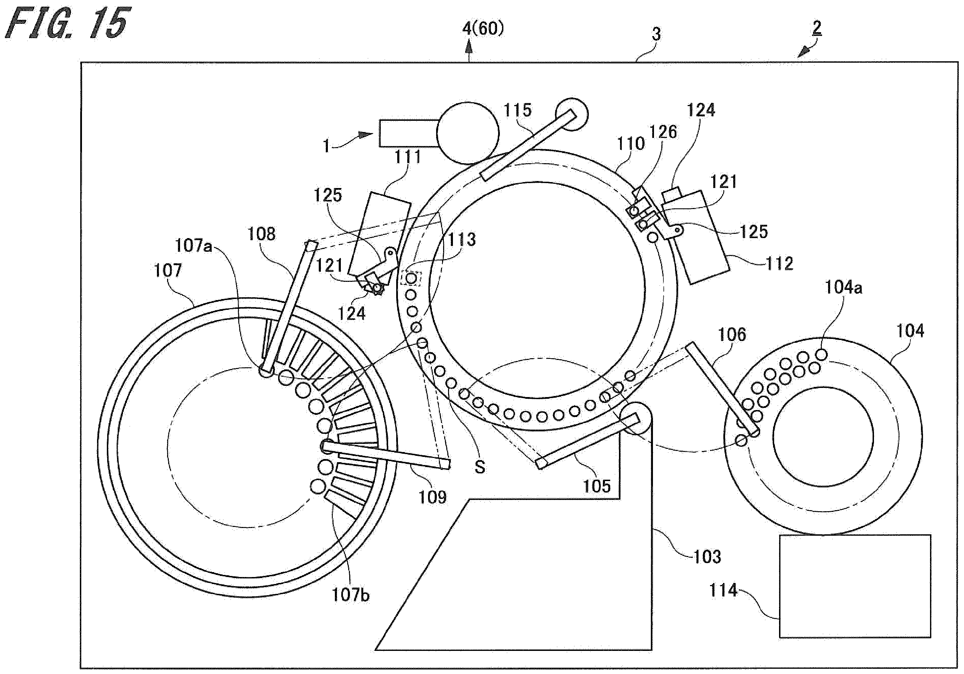

The configuration of an automatic analysis device 2 according to the present invention is described now with reference to Fig. 15. The automatic analysis device 2 illustrated in Fig. 15 includes the above-described luminescence measuring device 1. Here, a case where an immune analysis using CLEIA is continuously performed on multiple samples is described as an example.

CLEIA includes, as main steps, a reaction step, in which a sample (antigen or antibody) is caused to react with a reagent in a reaction vessel, a separation step (BF separation), in which a reacted (bound) substance and an unreacted (free) substance in the reaction vessel are separated from each other, and a light measurement step in which an amount of light emission caused in an immune complex produced from a reaction between the reagent and the sample is measured.

The automatic analysis device 2 that performs such an immune analysis includes an automatic measuring portion 3, including the luminescence measuring device 1, and a controlling device 4, which controls the entirety of the automatic measuring portion 3 and analyses measurement data output from the automatic measuring portion 3. Hereinbelow, the configuration of the automatic measuring portion 3 including the luminescence measuring device 1 is described first and then the controlling device 4 is described.

### <Automatic Measuring Portion 3>

The automatic measuring portion 3 mainly includes the luminescence measuring device 1, a reaction vessel supply unit 103, a sample stand unit 104, a reaction vessel transport unit 105, a sample pipetting unit 106, a reagent cooling unit 107, a first reagent pipetting unit 108, a second reagent pipetting unit 109, an immuno-enzyme reaction unit 110, a first BF separation unit 111, a second BF separation unit 112, a substrate liquid cooling portion 114, and a vessel transport arm 115.

The reaction vessel supply unit 103 houses multiple reaction vessels S and provides the multiple reaction vessels S one by one to a transfer position in the reaction vessel supply unit 103. Each of the reaction vessels S provided to the transfer position is transported to the immuno-enzyme reaction unit 110 by the reaction vessel transport unit 105. A sample and a predetermined reagent are fed to each of the reaction vessels S transported to the immuno-enzyme reaction unit 110.

The reaction vessel transport unit 105 includes an arm, which rises and lowers vertically and freely rotates around a vertical line that passes through its base end portion, and a holding portion, disposed at a far end portion of the arm. The reaction vessel transport unit 105 holds each reaction vessel S fed to a feed position of the reaction vessel supply unit 103 using the holding portion and rotates the arm to transport the reaction vessel S to a predetermined position of the immuno-enzyme reaction unit 110 at a predetermined timing.

The sample stand unit 104 includes a turntable having a shape of a substantially cylindrical tubular vessel having one end in the axial direction open. The sample stand unit 104 houses multiple sample vessels 104a. Each sample vessel 104a holds a sample, such as blood or urine, taken from a subject. The multiple sample vessels 104a are arranged at predetermined intervals in the circumferential direction of the sample stand unit 104. The sample stand unit 104 is supported by a driving mechanism, not illustrated, so as to be rotatable in the circumferential direction. The sample stand unit 104 is rotated by the driving mechanism, not illustrated, in the circumferential direction at each predetermined angle range at a predetermined speed. In the example illustrated in Fig. 15, the sample vessels 104a are arranged in the circumferential direction of the sample stand unit 104 in two rows, which are spaced apart from each other at a predetermined distance in the radial direction of the sample stand unit 104. Examples usable as a sample may include a sample diluted by a predetermined dilution.

The sample pipetting unit 106 includes an arm and a probe. The arm rises and lowers vertically and freely rotates around a vertical line passing through its base end portion. The probe is disposed at a far end portion of the arm. The sample pipetting unit 106 sucks, through the probe, the sample inside each sample vessel 104a shifted to a predetermined position of the sample stand unit 104 and rotates the arm to pipette the sample into a reaction vessel S positioned at a predetermined position of the immuno-enzyme reaction unit 110 at a predetermined timing.

Similarly to the sample stand unit 104, the reagent cooling unit 107 also includes a turntable having a shape of a substantially cylindrical tubular vessel having one end in the axial direction open. The reagent cooling unit 107 is supported by a driving mechanism, not illustrated, so as to be rotatable in the circumferential direction. The reagent cooling unit 107 is rotated by the driving mechanism, not illustrated, forward or backward in the circumferential direction by each predetermined angle range at a predetermined speed.

The reagent cooling unit 107 houses first reagent vessels 107a and second reagent vessels 107b. The first reagent vessels 107a and the second reagent vessels 107b are arranged on the reagent cooling unit 107 in the circumferential direction at predetermined intervals. Each first reagent vessel 107a holds a first reagent, an example of which is a magnetic reagent containing magnetic particles that react with an intended antigen in the sample. Each second reagent vessel 107b holds a second reagent, an example of which is a labeling reagent (enzyme antibody) that reacts with a reacted product in which the magnetic reagent is bound with the antigen in the sample. The inside of the reagent cooling unit 107 is kept at a predetermined temperature by a cooling system, not illustrated. Thus, the first reagent (magnetic reagent) held in each first reagent vessel 107a and the second reagent (labeling reagent) held in each second reagent vessel 107b are cooled at the predetermined temperature.

The first reagent pipetting unit 108 includes an arm and a probe. The arm rises and lowers vertically and freely rotates around a vertical line passing through its base end portion. The probe is disposed at a far end portion of the arm. The first reagent pipetting unit 108 sucks, through the probe, the first reagent (magnetic reagent) inside each first reagent vessel 107a shifted to a predetermined position of the reagent cooling unit 107 and rotates the arm to pipette the first reagent into the reaction vessel S positioned at a predetermined position of the immuno-enzyme reaction unit 110 at a predetermined timing.

The second reagent pipetting unit 109 has a similar configuration as that of the first reagent pipetting unit 108. The second reagent pipetting unit 109 sucks, through the probe, the second reagent (labeling reagent) inside each second reagent vessel 107b shifted to a predetermined position of the reagent cooling unit 107 and rotates the arm to pipette the second reagent into the reaction vessel S positioned at a predetermined position of the immuno-enzyme reaction unit 110 at a predetermined timing.

In the immuno-enzyme reaction unit 110, each of the reaction vessels S arranged in the circumferential direction allows the sample and a predetermined reagent corresponding to an intended analysis category to cause an immunoreaction and an immune complex resulting from this immunoreaction and a chemiluminescent substrate to cause an enzyme reaction. Similarly to the sample stand unit 104, the immuno-enzyme reaction unit 110 includes a turntable having a shape of a substantially cylindrical tubular vessel having one end in the axial direction open. The immuno-enzyme reaction unit 110 is supported by a driving mechanism, not illustrated, so as to be rotatable in the circumferential direction. The immuno-enzyme reaction unit 110 is rotated by the driving mechanism, not illustrated, in the circumferential direction by each predetermined angle range at a predetermined speed. Here, the immuno-enzyme reaction unit 110 rotates counterclockwise. In the example illustrated in Fig. 15, the reaction vessels S are arranged in the circumferential direction of the immuno-enzyme reaction unit 110 in a single row at a predetermined interval in the radial direction of the immuno-enzyme reaction unit 110. Alternatively, a row of reaction vessels S for the first reagent, described below, and a row of reaction vessels S for the second reagent, described below, may be disposed at a predetermined distance away from each other in the radial direction.

When the first reagent pipetting unit 108 pipettes a magnetic reagent into each reaction vessel S holding the sample, the immuno-enzyme reaction unit 110 stirs a liquid mixture containing the magnetic reagent and the sample using a stirring system, not illustrated, and allows the magnetic reagent and the antigen in the sample to cause immunoreactions for a predetermined time period (primary immunoreaction). Subsequently, the immuno-enzyme reaction unit 110 moves the reaction vessel S to a first magnetic collection mechanism (magnet 113) to magnetically collect a reacted product, in which the antigen and the magnetic reagent are bound, using a magnetic force. In this state, the inside of the reaction vessel S is cleaned and an unreacted substance that has not reacted with the magnetic reagent is removed (primary BF separation).

The first magnetic collection mechanism is fixed at a position corresponding to the first BF separation unit 111, disposed near the outer circumferential portion of the immuno-enzyme reaction unit 110. The turntable of the immuno-enzyme reaction unit 110 includes two layers, that is, a fixed lower layer and a rotatable upper layer. The magnet 113 is disposed as the first magnetic collection mechanism on the lower layer of the turntable. The reaction vessels S are disposed on the upper layer of the turntable. The magnet 113 magnetically collects the reacted product inside the reaction vessel S.

The first BF separation unit 111 includes an arm 125, a nozzle 121 attached to the arm 125, and a cleaning bath 124. The arm 125 rises and lowers vertically and freely rotates around a vertical line passing through its base end portion. The arm 125 moves the nozzle 121 between the reaction vessel S positioned at a primary BF separation position of the immuno-enzyme reaction unit 110 and the cleaning bath 124 positioned at a nozzle cleaning position near the first BF separation unit 111. The nozzle 121 discharges a cleaning liquid into the reaction vessel S holding the sample and the magnetic reagent at the primary BF separation position and sucks the cleaning liquid from the reaction vessel S to clean the reaction vessel S and remove an unreacted substance that did not react with the magnetic reagent (BF cleaning).

When each reaction vessel S is transported to the primary BF separation position, the first BF separation unit 111 performs primary BF separation. In the primary BF separation and the BF cleaning, a reacted product, in which an intended antigen in the sample and the magnetic reagent are bound, is magnetically collected in the reaction vessel S. When the primary BF separation is finished, the arm 125 moves the nozzle 121 to the nozzle cleaning position at which the cleaning bath 124 is disposed.

After the primary BF separation, when the second reagent pipetting unit 109 pipettes a labeling reagent into the reaction vessel S in which a reacted product remains, the immuno-enzyme reaction unit 110 stirs a liquid mixture containing the magnetic reagent and the sample using a stirring system, not illustrated, and allows the reacted product and the labeling reagent to cause an immunoreaction (secondary immunoreaction) for a predetermined time period. Subsequently, the immuno-enzyme reaction unit 110 moves the reaction vessel S to a second magnetic collection mechanism, not illustrated, to magnetically collect an immune complex, in which the reacted product and the labeling reagent are bound, using a magnetic force. In this state, the inside of the reaction vessel S is cleaned and the unreacted substance that has not reacted with the labeling reagent is removed (secondary BF separation).

The second magnetic collection mechanism includes a magnet similar to the magnet 113 of the first magnetic collection mechanism. The second magnetic collection mechanism is fixed in a position corresponding to the second BF separation unit 112, disposed near the outer circumferential portion of the immuno-enzyme reaction unit 110. In the example illustrated in Fig. 15, the magnet included in the second magnetically collecting mechanism is disposed below the nozzle 121 positioned at the secondary BF separation position.

The second BF separation unit 112 has a similar configuration as that of the first BF separation unit 111. The second BF separation unit 112 is disposed at a predetermined distance away from the first BF separation unit 111 in the circumferential direction. The arm 125 rises and lowers vertically and freely rotates around a vertical line that passes through its base end portion. The arm 125 moves the nozzle 121 between the reaction vessel S positioned at a secondary BF separation position of the immuno-enzyme reaction unit 110 and the cleaning bath 124, positioned at a nozzle cleaning position near the second BF separation unit 112. The nozzle 121 discharges a cleaning liquid into the reaction vessel S holding the labeling reagent at the secondary BF separation position and sucks the cleaning liquid from the reaction vessel S to clean the reaction vessel S and remove a remnant unreacted substance that did not react with the labeling reagent (BF cleaning).

The second BF separation unit 112 performs secondary BF separation when each reaction vessel S is transported to the secondary BF separation position. During the secondary BF separation and the BF cleaning, an immune complex in which the labeling reagent and the reacted product, consisting of an intended antigen in the sample and the magnetic reagent, are bound is magnetically collected in the reaction vessel S. When the secondary BF separation is finished, the arm 125 moves the nozzle 121 to the nozzle cleaning position at which the cleaning bath 124 is disposed.

A substrate solution pipetting unit 126 is also attached to the arm 125 of the second BF separation unit 112. The substrate solution pipetting unit 126 is disposed at a position further from the rotation shaft of the arm 125 than is the position of the nozzle 121. The substrate solution pipetting unit 126 is connected to the substrate liquid cooling portion 114, which holds and cools a substrate solution, with a tube, not illustrated, interposed therebetween. The substrate solution pipetting unit 126 pipettes, into each reaction vessel S that has been subjected to the secondary BF separation, a substrate solution containing a chemiluminescent substrate that specifically reacts with a labeling reagent (enzyme antibody) in an immune complex in which the labeling reagent is bounded with a magnetic reagent and an antigen. Each reaction vessel S holding the substrate solution is transported to a predetermined position by a rotation of the immuno-enzyme reaction unit 110. The reaction vessel S that has been transported to the predetermined position is shifted to the light illumination measurement unit 1 by the vessel transport arm 115.

The luminescence measuring device 1 has been described thus far with reference to Fig. 1 to Fig. 6, so that the detailed description is omitted here. The luminescence measuring device 1 is disposed adjacent to the immuno-enzyme reaction unit 110 and into which the reaction vessel S is transported using the vessel transport arm 115 at a timing of step S1 or step S7, described above with reference to the flowchart of Fig. 8 or Fig. 14.

### <Controlling Device 4>

The controlling device 4 controls the operation of each unit of the automatic measuring portion 3 including the luminescence measuring device 1 and also performs data processing on measurement data output from the photodetector of the luminescence measuring device 1. The controlling device 4 includes components such as an input-output processing portion, an input portion, an analysis portion, a storage portion, an output portion, and a communication interface. Besides the photodetector and the driving mechanism of the luminescence measuring device 1 described above, each unit of the automatic measuring portion 3 is connected to the controlling device 4.

In this automatic analysis device 2, the input-output processing portion 60 (see Fig. 1) of the above-described luminescence measuring device 1 is included in the controlling device 4. The input-output processing portion of the controlling device 4 controls driving of the photodetector 20 and the driving mechanism 50 in the above-described light-emission measurement method. The analysis portion of the controlling device 4 performs data processing in the above-described light-emission measurement method.

Particularly in the photodetector 20 and the driving mechanism 50 of the luminescence measuring device 1 in the controlling device 4, a step for determining whether light-emission measurements for all the predetermined samples are finished is performed, for example, after the reaction vessel is taken out of the luminescence measuring device 1 in step S7 in the flowchart illustrated in Fig. 8 or Fig. 14. Driving of the photodetector 20 and the driving mechanism 50 is then controlled so that the processing returns to step S1 to repeatedly perform the light-emission measurement until it is determined that all the measurements are finished.

### <Effect of Automatic Analysis Device 2>

The above-described automatic analysis device 2 is capable of continuously performing a light-emission measurement using the luminescence measuring device 1. The automatic analysis device 2 is thus capable of reliably preventing the photodetector 20 from being broken due to an intrusion of outdoor light during a continuous light-emission measurement while the operation procedure is simplified.

### Reference Signs List

- 1, 1': luminescence measuring device
- 2: automatic analysis device
- 10, 10': housing
- 11: vessel housing portion
- 12: reaction-vessel port
- 13: optical through path
- 14, 14': grooved portion
- 20: photodetector
- 21: light receiving surface
- 30, 30': light-shielding member
- 30a: entrance shutter portion
- 30b, 30b': detection shutter portion
- 31: entrance opening
- 32: detection opening
- 33: optical filter
- 40: guard member
- 50: driving mechanism
- 60: input-output processing portion
- 115: vessel transport arm
- S: reaction vessel

## Claims

1. A luminescence measuring device, comprising:
a housing having a black box form, the housing including a vessel housing portion that houses a reaction vessel, a reaction-vessel port through which the reaction vessel is taken in and out of the vessel housing portion, and an optical through path that connects the vessel housing portion to an outside;
a photodetector attached to the housing, the photodetector having a light receiving surface facing the vessel housing portion across the optical through path;
a light-shielding member including an entrance shutter portion and a detection shutter portion, the entrance shutter portion rendering the reaction-vessel port open or closed, and the detection shutter portion rendering the optical through path open or closed; and
a driving mechanism that drives the entrance shutter portion and the detection shutter portion in synchronization with each other,
wherein the entrance shutter portion renders the reaction-vessel port open in a state where the detection shutter portion is covering the optical through path.

2. The luminescence measuring device according to Claim 1,
wherein the entrance shutter portion and the detection shutter portion are integrally formed from the light-shielding member,
wherein the entrance shutter portion includes an entrance opening, which is to be aligned with the reaction-vessel port,
wherein the detection shutter portion includes a detection opening, which is to be aligned with the optical through path,
wherein the detection shutter portion of the light-shielding member covers the optical through path in a state where the reaction-vessel port and the entrance opening are aligned with each other, and
wherein the entrance shutter portion of the light-shielding member covers the reaction-vessel port in a state where the optical through path and the detection opening are aligned with each other.

3. The luminescence measuring device according to Claim 1 or 2,
wherein the detection shutter portion includes a plurality of detection openings, which are to be aligned with the optical through path, the plurality of detection openings being arranged in a direction in which the detection shutter portion is driven, and
wherein an optical filter is disposed at at least one of the plurality of detection openings.

4. The luminescence measuring device according to any one of Claims 1 to 3,
wherein the housing includes a grooved portion that divides the optical through path, and
wherein the detection shutter portion is fitted into the grooved portion.

5. The luminescence measuring device according to any one of Claims 1 to 4,
wherein the housing has a shape of a cylinder, the vessel housing portion is formed in a bottom surface of the cylinder at a position apart from a central axis of the cylinder so as to extend along the central axis, and the optical through path is formed in a side circumferential wall of the cylinder,
wherein the entrance shutter portion and the detection shutter portion are integrally formed from the light-shielding member having a shape of a cylindrical tube having one bottom surface closed, and are fitted to the housing, and
wherein an entrance opening, which is to be aligned with the reaction-vessel port, is formed in a bottom surface of the cylindrical tube, the bottom surface serving as the entrance shutter portion, and a detection opening, which is to be aligned with the optical through path, is formed in a side circumferential wall of the cylindrical tube, the side circumferential wall serving as the detection shutter portion.

6. The luminescence measuring device according to any one of Claims 1 to 5,
wherein the entrance shutter portion has an entrance opening, which is to be aligned with the reaction-vessel port, and
wherein a guard member, which covers the entrance opening, is superposed on the entrance shutter portion in the state where the reaction-vessel port of the housing is covered with the entrance shutter portion.

7. The luminescence measuring device according to any one of Claims 1 to 6, comprising:
an input-output processing portion that causes the photodetector to start a measurement in synchronization with the driving mechanism starting driving the entrance shutter portion and the detection shutter portion.

8. The luminescence measuring device according to Claim 7, wherein the input-output processing portion temporarily stops driving the entrance shutter portion and the detection shutter portion in a state where the optical through path and the detection opening are aligned with each other.

9. The luminescence measuring device according to Claim 8,
wherein, on a basis of information on driving of the entrance shutter portion and the detection shutter portion, the input-output processing portion extracts, as a light-emission measurement value, a range of measurement data acquired while the optical through path and the detection opening are aligned with each other from measurement data continuously acquired by the photodetector since the photodetector starts the measurement.

10. An automatic analysis device, comprising:
a luminescence measuring device;
a vessel transport arm that takes a reaction vessel into or out of the luminescence measuring device; and
an input-output processing portion that controls photodetection performed by the luminescence measuring device and taking in or out of the reaction vessel performed by the vessel transport arm,
wherein the luminescence measuring device includes
a housing having a black box form, the housing including a vessel housing portion that houses a reaction vessel, a reaction-vessel port through which the reaction vessel is taken in and out of the vessel housing portion, and an optical through path that connects the vessel housing portion to an outside;
a photodetector attached to the housing, the photodetector having a light receiving surface facing the vessel housing portion across the optical through path;
a light-shielding member including an entrance shutter portion and a detection shutter portion, the entrance shutter portion rendering the reaction-vessel port open or closed, and the detection shutter portion rendering the optical through path open or closed; and
a driving mechanism that drives the entrance shutter portion and the detection shutter portion in synchronization with each other,
wherein the entrance shutter portion renders the reaction-vessel port open in a state where the detection shutter portion is covering the optical through path, and
wherein the input-output processing portion causes the photodetector to start a measurement in synchronization with the driving mechanism starting driving the entrance shutter portion and the detection shutter portion after the vessel transport arm takes the reaction vessel into the vessel housing portion in a state where the entrance shutter portion renders the reaction-vessel port open.
